# EUROPÄISCHE PATENTSCHRIFT

(11) **EP 2 008 744 B1**
(45) Veröffentlichungstag und Bekanntmachung des Hinweises auf die Patenterteilung: **17.04.2013**
(21) Anmeldenummer: 08405161.4
(22) Anmeldetag: 24.06.2008
(51) Int. Cl.: B23B 31/00, B23B 31/11

(54) **Werkzeugkupplung**
Tool coupling
Dispositif d'accouplement pour outils

(30) Priorität: 27.06.2007 CH 10312007
(43) Veröffentlichungstag der Anmeldung: 31.12.2008
(73) Patentinhaber: Syntronic AG, 5106 Veltheim (CH)
(72) Erfinder: Walter Hürbin, 5225 Oberbözberg (CH)
(74) Vertreter: Gachnang, Hans Rudolf

(56) Entgegenhaltungen:
- WO-A-99/39076
- FR-A- 2 669 849
- US-A- 4 722 645
- US-A- 5 372 465

## Beschreibung

Gegenstand der Erfindung ist eine Werkzeugkupplung für spanabhebende Werkzeuge gemäss Oberbegriff des Patentanspruchs 1.

Die Kupplung von Werkzeugen mit der Spindel von Bearbeitungseinheiten erfolgt durch einen zentrierenden Konus am Werkzeugschaft und Präzisionsüberwurfmuttern. Solche Kupplungen lassen nur schlanke zylindrische Schäfte zu (siehe z.B. US-A-4 722 645).

Eine Aufgabe der vorliegenden Erfindung besteht nun darin, eine Werkzeugkupplung zu schaffen, bei der der Werkzeugschaft möglichst stabil ausgeführt ist.

Gelöst wird diese Aufgabe durch eine Werkzeugkupplung gemäss den Merkmalen des Patentanspruchs 1. Vorteilhafte Ausgestaltungen der Werkzeugkupplung sind in den abhängigen Ansprüchen definiert.

Es gelingt mit der erfindungsgemässen Werkzeugkupplung, Werkzeuge mit beliebig gross dimensionierten Schaftdurchmessern zu kuppeln. Im weiteren wird auch der Durchmesser des Werkzeugkopfes mit den Schneidwerkzeugen durch die Mutter nicht limitiert, da diese nicht über das Werkzeug geschoben werden muss, sondern aus der entgegengesetzten Richtung, d.h. axial vom konusseitigen Ende her mit dem Werkzeug verbunden wird.

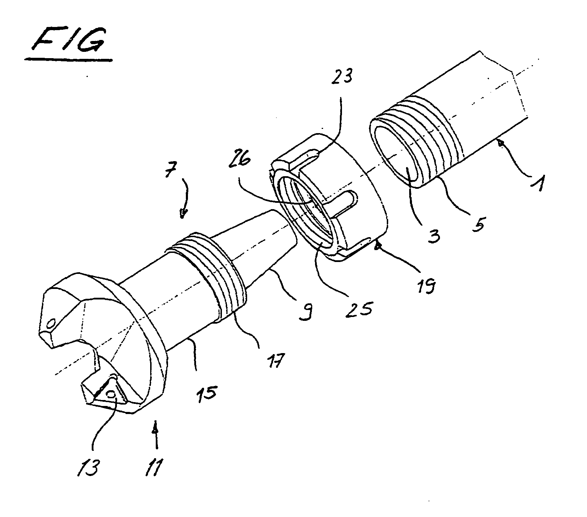

Anhand eines illustrierten Ausführungsbeispiels wird die Erfindung näher erläutert. Es zeigt die einzige Figur eine Explosionsdarstellung eines Werkzeugs beabstandet zur Spindel und eines Verbindungselements zum Verbinden des Werkzeugs mit der Spindel.

Mit Bezugszeichen 1 ist das vordere Ende einer Arbeitsspindel an einer Bearbeitungseinheit (letztere nicht dargestellt) bezeichnet. Die Spindel 1 weist eine zentrale konische Bohrung 3 auf. Auf dem Mantel der Spindel 1 ist ein erstes Gewinde 5 angebracht.

Das mit Bezugszeichen 7 bezeichnete Werkzeug umfasst einen Konus 9 und, dem Konus 9 axial gegenüberliegende einen Werkzeugkopf 11, an dessen Ende z.B. Schneidwerkzeuge 13 wie Wendeplatten befestigt sind. Auf einem z.B. zylindrischen Mittelteil 15 ist ein zweites Gewinde 17 ausgebildet. Die Steigung des zweiten Gewindes 17 ist im ersten Ausführungsbeispiel kleiner als die Steigung des ersten Gewindes 5 an der Spindel 1. Es können sowohl rechts- als auch linksläufige Gewinde ausgebildet sein. In der Figur ist zwischen der Spindel 1 und dem Werkzeug 7 ein hülsenförmiges Verbindungselement 19 dargestellt, an dessen Peripherie Mittel 23 zum Einrasten eines Werkzeugschlüssels (Werkzeugschlüssel nicht dargestellt) ausgebildet sind.

In der Bohrung des Verbindungselements 19 ist auf der Seite, die dem Werkzeug 7 zugewendet ist, ein erster Gewindeabschnitt 25 mit einer Gewindesteigung, welche derjenigen des zweiten Gewindes 17 entspricht, eingelassen. An der gegenüberliegenden, der Spindel 1 zugewendeten Seite des Verbindungselements 19 ist ein zweiter Gewindeabschnitt 26 (nur teilweise sichtbar) eingelassen, der eine Steigung aufweist, welche der Steigung des ersten Gewindes 5 an der Spindel 1 entspricht. Der Innendurchmesser des Verbindungselements 19 kann gleich, kleiner oder grösser als der Durchmesser des Werkzeugkopfs 11 ausgebildet sein.

Nachfolgend wird die Handhabung der Werkzeugkupplung kurz erläutert. Zum Verbinden des Werkzeugs 7 mit der Spindel 1 wird vorerst das Verbindungselement 19 über den Konus 9 auf das Werkzeug 7 geschoben und mit diesem durch mehrere Drehungen des Verbindungselements 19 verschraubt. Das mit dem Werkzeug 7 nun teilverschraubte Verbindungselement 19 wird danach auf die Spindel 1 aufgesetzt. Durch Drehen des Verbindungselements 19 in entgegengesetzter Drehrichtung, wird das Verbindungselement 19 auf das Gewinde 5 der Spindel 1 aufgebracht und das Werkzeug 7 bzw. dessen Konus 9 in die konische Bohrung 3 an der Spindel 1 hineingezogen. Durch die unterschiedlichen Steigungen der beiden Gewinde 5, 17 an der Spindel 1 und am Werkzeug 7 erfolgt das Zusammenziehen der beiden Teile beispielsweise mit halber Geschwindigkeit, wenn die Unterschiede der Steigungen der beiden Gewinde 5,17 im Verhältnis 1:2 stehen.

Selbstverständlich kann das Gewinde mit der grösseren Steigung auch auf dem Werkzeug 7 angeordnet sein.

Alternativ zum ersten Ausführungsbeispiel können auch gegenläufige Gewinde mit gleichen oder unterschiedlichen Steigungen ausgebildet sein. Beim Verbinden von Werkzeug 7 und Spindel 1 mit gegenläufigen Gewinden 5,17 muss das Verbindungselement 19 nur in einer Drehrichtung gedreht werden.

Durch diese Ausbildung des Verbindungselements 19 kann folglich mit wenigen Umdrehungen am Verbindungselement 19 eine optimale Verbindung zwischen Spindel 1 und Werkzeug 7 erreicht werden.

## Patentansprüche

1. Werkzeugkupplung für spanabhebende Werkzeuge (7) an einer Bearbeitungseinheit mit einer Arbeitsspindel (1) mit einer konischen Aufnahmebohrung (3) und einem ersten Gewinde (5) für die Verbindung mit dem Werkzeug (7), umfassend ein Werkzeug (7) mit einem angeformten Verbindungskonus (9) und einem Verbindungselement (19) zum lösbaren Verbinden des Werkzeugs (7) mit der Arbeitsspindel (1),
**dadurch gekennzeichnet, dass** das Verbindungselement (19) hülsenförmig ausgebildet ist, wobei in der Bohrung des Verbindungselements (19) zwei unterschiedliche Innengewindeabschnitte (25,26) ausgebildet sind, welche mit dem ersten Gewinde (5) auf der Spindel (1) und einem zweiten Gewinde (17) auf dem Schaft des Werkzeugs (7) zu kämmen bestimmt sind, um die Spindel (1) und das Werkzeug (7) axial gegeneinander zu verspannen.

2. Werkzeugkupplung nach Anspruch 1, **dadurch gekennzeichnet, dass** das erste Gewinde (5) an der Spindel (1) eine grössere Steigung aufweist als das zweite Gewinde (17) am Werkzeug (7).

3. Werkzeugkupplung nach Anspruch 1, **dadurch gekennzeichnet, dass** das erste Gewinde (5) an der Spindel (1) eine kleinere Steigung aufweist als das zweite Gewinde (17) am Werkzeug (7).

4. Werkzeugkupplung nach einem der Ansprüche 2 oder 3, **dadurch gekennzeichnet, dass** beide Gewinde (5,17) rechtsläufig oder linksläufig ausgebildet sind.

5. Werkzeugkupplung nach einem der Ansprüche 2 oder 3, **dadurch gekennzeichnet, dass** das eine Gewinde (5) oder (17) rechtsläufig und das andere Gewinde (17) oder (5) linksläufig ausgebildet sind.

6. Werkzeugkupplung nach einem der Ansprüche 1 bis 5, **dadurch gekennzeichnet, dass** auf der Peripherie des Verbindungselements (19) Mittel (23) zum Einrasten eines Werkzeugschlüssels zum Drehen des Verbindungselements (19) ausgebildet sind.

7. Werkzeugkupplung nach einem der Ansprüche 1 oder 6, **dadurch gekennzeichnet, dass** der Innendurchmesser der Innengewinde (26) kleiner, gleich oder grösser als der Durchmesser des Werkzeugkopfs (11) am Werkzeug (7) ausgebildet ist.

## Claims

1. A tool coupling for material-removing tools (7) on a machining unit comprising a work spindle (1) with a conical receiving bore (3) and a first thread (5) for connection to the tool (7), comprising a tool (7) with an integrally shaped connecting cone (9) and a connecting element (19) for releasably connecting the tool (7) to the work spindle (1),
**characterized in that** the connecting element (19) is shaped like a sleeve, wherein two different inner thread sections (25, 26) are formed in the bore of the connecting element (19), which are intended to engage the first thread (5) on the spindle (1) and a second thread (17) on the shaft of the tool (7) in order to secure the spindle (1) and the tool (7) to each other in the axial direction.

2. The tool coupling according to claim 1, **characterized in that** the lead of the first thread (5) on the spindle (1) exceeds that of the second thread (17) on the tool (7).

3. The tool coupling according to claim 1, **characterized in that** the lead of the first thread (5) on the spindle (1) is below that of the second thread (17) on the tool (7).

4. The tool coupling according to any one of claims 2 or 3, **characterized in that** both threads (5, 17) are right-handed threads or left-handed threads.

5. The tool coupling according to any one of claims 2 or 3, **characterized in that** one thread (5) or (17) is a right-handed thread and the other thread (17) or (5) is a left-handed thread.

6. The tool coupling according to any one of claims 1 to 5, **characterized in that** means (23) for snap-locking a tool key that serves to rotate the connecting element (19) are formed on the periphery of the connecting element (19).

7. The tool coupling according to any one of claims 1 or 6, **characterized in that** the inner diameter of the inner threads (26) is smaller than, the same as or larger than the diameter of the tool head (11) on the tool (7).

## Revendications

1. Dispositif d'accouplement d'outils pour outils (7) par enlèvement de copeaux sur une unité d'usinage, avec une broche de travail (1), avec un alésage de réception (3) conique et un premier filet (5) pour le raccordement à l'outil (7), comprenant un outil (7) avec un cône de raccordement (9) formé et un élément de raccordement (19) pour le raccordement détachable de l'outil (7) à la broche de travail (1),
**caractérisé en ce que** l'élément de raccordement (19) est réalisé en forme de douille, deux tronçons de filet intérieur (25, 26) différents étant constitués dans l'alésage de l'élément de raccordement (19) et étant destinés à engrener avec le premier filet (5) sur la broche (1) et avec un deuxième filet (17) sur la queue de l'outil (7) afin de serrer la broche (1) et l'outil (7) axialement l'une contre l'autre.

2. Dispositif d'accouplement selon la revendication 1, **caractérisé en ce que** le premier filet (5) présente sur la broche (1) un pas plus important que le deuxième filet (17) sur l'outil (7).

3. Dispositif d'accouplement selon la revendication 1, **caractérisé en ce que** le premier filet (5) sur la broche (1) présente un pas plus faible que le deuxième filet (17) sur l'outil (7).

4. Dispositif d'accouplement selon une des revendications 2 ou 3, **caractérisé en ce que** les filets (5, 17) sont constitués avec rotation à droite ou rotation à gauche.

5. Dispositif d'accouplement selon une des revendications 2 ou 3, **caractérisé en ce qu'**un filet (5) ou (17) est constitué avec rotation à droite, et l'autre filet (17) ou (5) est constitué avec rotation à gauche.

6. Dispositif d'accouplement selon une des revendications 1 à 5, **caractérisé en ce que**, sur la périphérie de l'élément de raccordement (19), des moyens (23) sont constitués pour l'encliquetage d'une clé d'outil pour la mise en rotation de l'élément de raccordement (19).

7. Dispositif d'accouplement selon une des revendications 1 ou 6, **caractérisé en ce que** le diamètre intérieur des filets intérieurs (26) est plus petit, égal ou plus grand que le diamètre de la tête d'outil (11) sur l'outil (7).
